(19) Europäisches Patentamt
European Patent Office
Office européen des brevets

(11) **EP 1 857 973 A1**

(12) **EUROPEAN PATENT APPLICATION**
published in accordance with Art. 158(3) EPC

(43) Date of publication:
**21.11.2007 Bulletin 2007/47**

(51) Int Cl.:
*G06T 1/00* (2006.01)   *G09G 3/20* (2006.01)
*G09G 3/36* (2006.01)   *H04N 1/60* (2006.01)
*H04N 1/46* (2006.01)   *H04N 9/67* (2006.01)

(21) Application number: **06711966.9**

(22) Date of filing: **19.01.2006**

(86) International application number:
**PCT/JP2006/300720**

(87) International publication number:
**WO 2006/095496 (14.09.2006 Gazette 2006/37)**

(84) Designated Contracting States:
**DE FR GB**

(30) Priority: **10.03.2005 JP 2005066527**

(71) Applicant: **Sharp Kabushiki Kaisha**
**Osaka-shi, Osaka 545-8522 (JP)**

(72) Inventor: **OOHARA, Akemi,**
**4-34-7-101, Narashinodai**
**Chiba 274-0063 (JP)**

(74) Representative: **Müller, Frithjof E.**
**Müller Hoffmann & Partner**
**Patentanwälte**
**Innere Wiener Strasse 17**
**81667 München (DE)**

(54) **COLOR CHANGING DEVICE, PROGRAM, IMAGE DISPLAY, AND PORTABLE TERMINAL**

(57)    A color converting apparatus which is used to correct the hue shift without narrowing the color reproduction region, has a small circuit scale, and does not need many memory resources. A primary area detector 10 determines to what area out of six areas classified according to the relation of magnitude of the RGB the input RGB values belong and outputs the minimum values of RGB. A border coefficient table 11 outputs a coefficient determining the border to further divide into two the six primary areas according to the parameter indicating the primary area. The coefficient and the RGB values are multiplied and then added. A comparator 12 compares the addition result with the RGB minimum values output from the primary area detector 10, and the result is input into a matrix coefficient table 13. The matrix coefficient table 13 outputs the coefficient of a matrix calculation to convert the RGB value to output R', G', B' values corresponding to the area to which the input RGB values belong according to the parameter indicating the primary area and the result of the comparison by the comparator 12.

FIG. 1

**Description**

TECHNICAL FIELD

The present invention relates to a color converting apparatus that converts color image data to match the characteristics of the color image output apparatus when the color image output apparatus outputs the color image data, a computer program therefor, an image display device including the color converting apparatus, and a mobile terminal device including the image display device as a display means.

BACKGROUND OF THE INVENTION

Conventionally, many of the uses of display screens of a mobile terminal device are the uses for which a user is not conscious of the color tone of the original image such as creating text data such as email and enjoying CGI games. However, with the increase of mobile terminal devices each loaded with a camera, uses such as viewing static images and moving images shot have increased recently. In addition, prevalence of mobile terminal devices that can receive TV broadcasting has also started and, therefore, demands for high quality images of display screens of mobile terminal devices are getting strong.

For each of many display screen of a mobile terminal device, a liquid crystal display device including as a light source a white LED produced by covering a blue LED having the peak thereof in the short wavelength region with a yellow fluorescent material is used. The above liquid crystal display device has features suitable for a mobile terminal device such as small power consumption and being easy to downsize. On the contrary, the above apparatus has a problem that the color reproduction region thereof for regions other than the blue region is narrow.

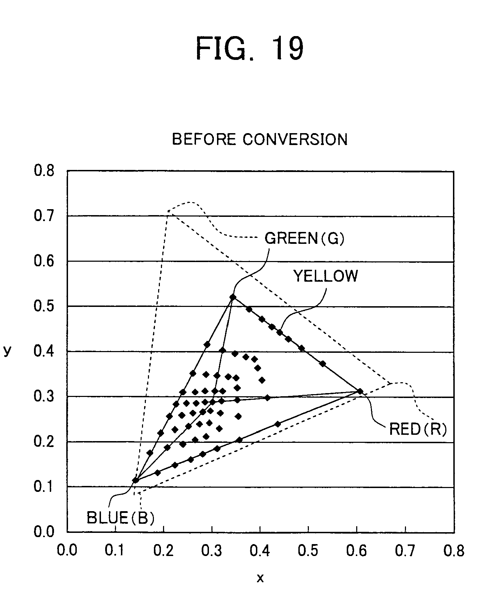

In Fig. 19, a solid line shows an example of the color reproduction region of a liquid crystal display device for a mobile terminal device including a white LED as a light source thereof. The color reproduction regions respectively for red and green are extremely narrow. Compared with the color reproduction region of NTSC indicated by a dotted line, the primary color point for green is significantly shifted to yellow direction. Therefore, when a video image created being matched with the color reproduction region of NTSC is decoded into RGB signals and the RGB signals are displayed being unchanged, for example, green leaves may look dead leaves and a grass-covered field may look a desolate field.

To solve the above problem, each hue only has to be coincided with each original hue by converting colors using three-dimensional matrix calculation. The conversion of colors by a three-dimensional matrix calculation is expressed in Equation (1).

[Equation 1]

$$\begin{pmatrix} R' \\ G' \\ B' \end{pmatrix} = \begin{pmatrix} c_{11} & c_{12} & c_{13} \\ c_{21} & c_{22} & c_{23} \\ c_{31} & c_{32} & c_{33} \end{pmatrix} \times \begin{pmatrix} R \\ G \\ B \end{pmatrix} \quad \cdots \; (1)$$

Where R, G, and B are RGB signals respectively representing a red component, a green component, and a blue component before the conversion, and R', G', and B' are RGB signals after the conversion.

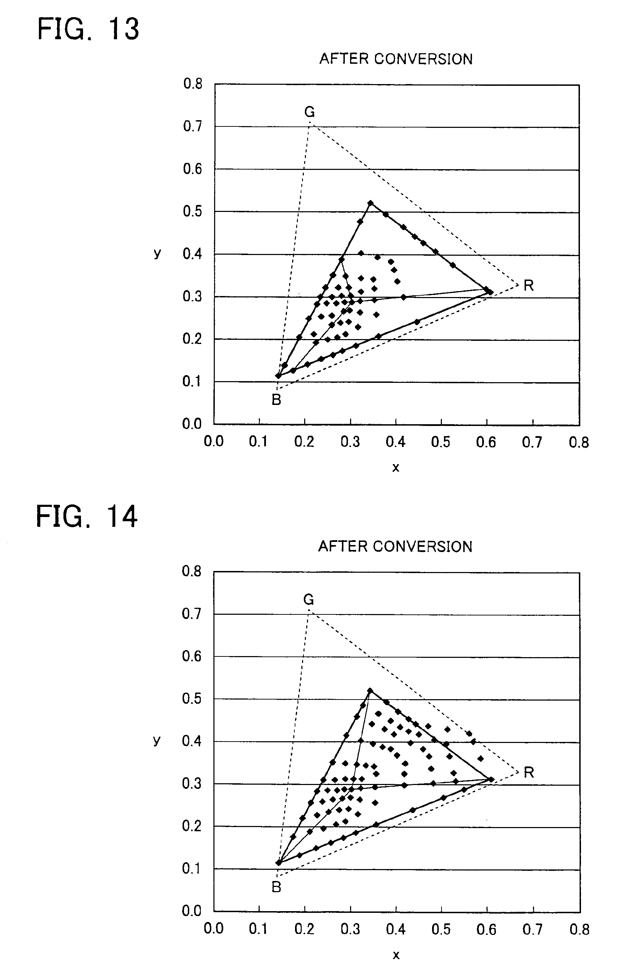

For example, for a display device having a color reproduction region indicated by a solid line in Fig. 14, when the hues thereof are matched with the NTSC color reproduction region indicated by a dotted line: the primary color point for red only has to be rotated toward green direction; the primary color point for green only has to be rotated toward blue direction; and the primary color point for blue only has to be rotated toward red direction. An example of a converting equation to match the hues will be expressed in Equation (2).

[Equation 2]

$$\begin{pmatrix} R' \\ G' \\ B' \end{pmatrix} = \begin{pmatrix} 1 & 0 & d \\ e & 1 & 0 \\ 0 & f & 1 \end{pmatrix} \times \begin{pmatrix} R \\ G \\ B \end{pmatrix} \quad \cdots (2)$$

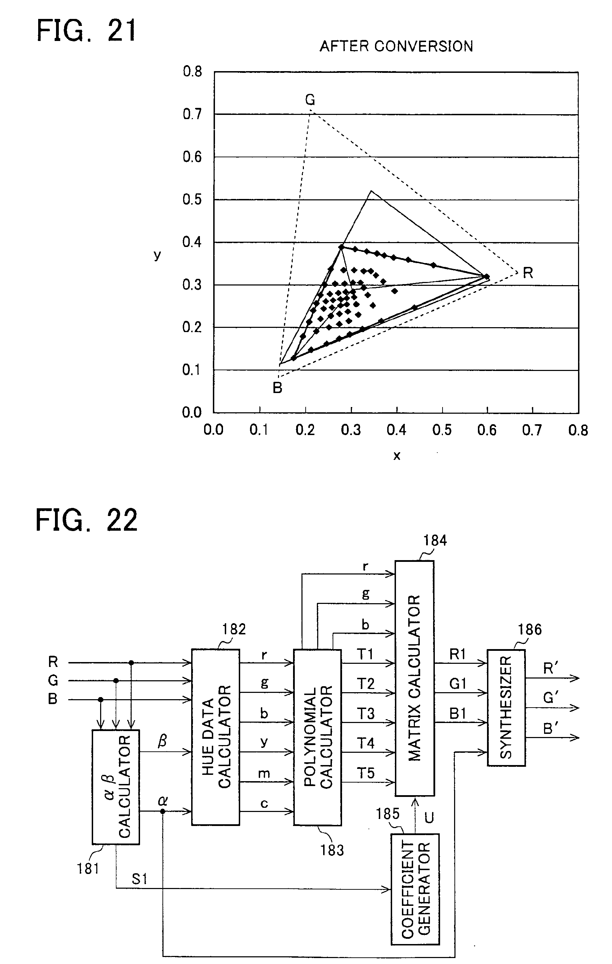

Where d, e, and f are respectively suitable constants. The color reproduction region and the hue axes obtained after the conversion of Equation (2) has been executed for a display device having the color reproduction region indicated by the solid line of Fig. 19 is shown in Fig. 21. The inside of a triangle drawn with a thick solid line is the color reproduction region after the conversion. Solid lines in the color reproduction region are hue axes. Due to the conversion of Equation (2), the hues can be matched with the NTSC standard.

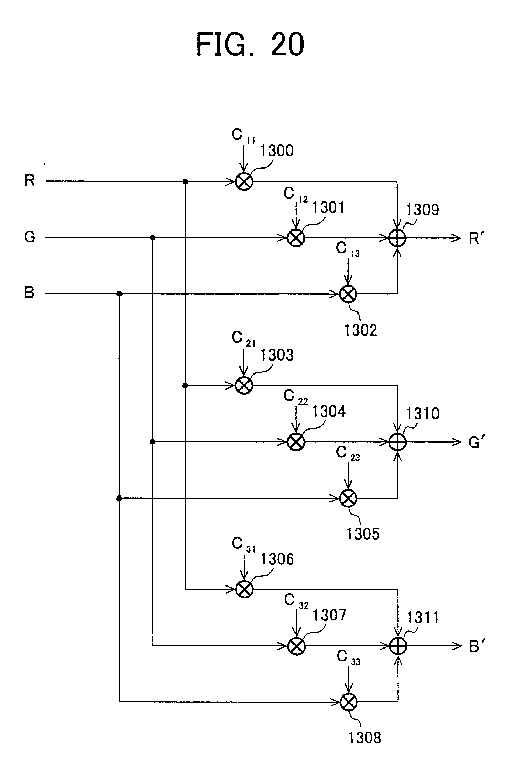

An exemplary configuration of a three-dimensional matrix calculator that realizes the above conversion is shown in Fig. 20. The above calculator can be relatively easily configured by nine multipliers 1300 to 1308 and three adders 1309 to 1311.

However, as shown in Fig. 21, the color reproduction region is significantly narrowed due to the color conversion of Equation (2) . Especially for the display device for a mobile terminal device using a white LED, a problem has arisen that the original color reproduction region is narrow and, in addition, the color reproduction region becomes extremely narrow when the conversion is executed.

Whereas, according to a method disclosed in Patent Document 1, the hues can be adjusted using matrix calculation of Equation (3) without narrowing the color reproduction region.

[Equation 3]

$$\begin{pmatrix} R' \\ G' \\ B' \end{pmatrix} = (Eij) \begin{pmatrix} r \\ g \\ b \end{pmatrix} + (Fij) \begin{pmatrix} c \times m \\ m \times y \\ y \times c \\ r \times g \\ g \times b \\ b \times r \\ h1r \\ h1g \\ h1b \\ h1c \\ h1m \\ h1y \\ h2ry \\ h2rm \\ h2gy \\ h2gc \\ h2bm \\ h2bc \end{pmatrix} + \begin{pmatrix} \alpha \\ \alpha \\ \alpha \end{pmatrix} \cdots (3)$$

Where i=1 to 3 and j=1 to 3 for (Eij), i=1 to 3 and j=1 to 18 for (Fij) ; h1r=min (m, y), h1g=min (y, c), hlb=min(c, m), h1c=min(g, b), h1m=min(b, r), h1y=min(r, g), h2ry=min(aq1×h1y, ap1×h1r), h2rm=min(aq2×h1m, ap2×h1r), h2gy=min(aq3×h1y, ap3×h1g), h2gc=min(aq4×h1c, ap4×h1g), h2bm=min(aq5×h1m, ap5×h1b), h2bc=min (aq6×h1c, ap6×h1b); and "aq1" to "aq6" and "ap1" to "ap6" are calculation coefficients. In addition, $\alpha$=min (R, G, B), r=R-$\alpha$, g=G-$\alpha$, b=B-$\alpha$, y=$\beta$-B, m=$\beta$-G, and c=$\beta$-R where $\beta$=max (R, G, B).

A color converting apparatus that realizes the hue adjustment according to Equation (3) is shown in Fig. 22. In Fig. 22: "181" denotes an $\alpha\beta$ calculator that calculates and outputs the maximum value $\beta$ and the minimum value $\alpha$ of an RGB signal input and generates and outputs identification signs that respectively identify each data; "182" denotes a hue data calculator that calculates hue data "r", "g", "b", "y", "m", and "c" from the RGB signals and the output from the above $\alpha\beta$ calculator 181; "183" denotes a polynomial calculator; "184" denotes a matrix calculator; "185" denotes a coefficient generator; and "186" denotes a synthesizer.

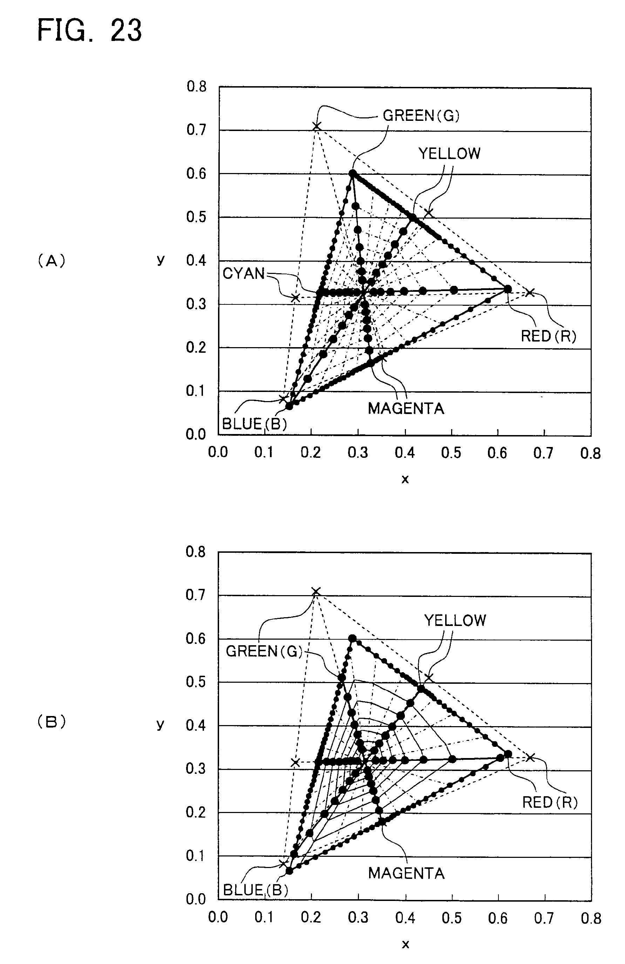

An example of hue adjustment by the color converting apparatus of Fig. 22 is shown in Fig. 23. In Fig. 23, a triangle of a thick solid line is the color reproduction region of an image reproducing apparatus. In Fig. 23, a triangle of a dotted line is the color reproduction region that is the target of the hue adjustment. The image reproducing apparatus is a display device such as a monitor. The direction of each of straight lines extending outwardly from the center of the triangle is the hue of each color. Fig. 23(A) is a diagram of the color reproduction region and the hues before the hue adjustment. Fig. 23 (B) is a diagram of the color reproduction region and the hues after the hue adjustment. The color reproduction region remains unchanged and the hues have been changed being matched with the targeted color reproduction region.

A method is also present of using a LUT (Look Up Table) that records the output values of these color conversions. Because a LUT records output data corresponding to all combinations of RGB signals, a memory having 2563×3≈50 MB is necessary to cope with input/output of 24-bit RGB signals that are currently the main stream.

Patent Document 1: Japanese Patent Publication No. 3432468

DISCLOSURE OF THE INVENTION

PROBLEM TO BE SOLVED BY THE INVENTION

Due to the conversion by three-dimensional matrix calculation, the color reproduction region is extremely narrowed as shown in Fig. 21. According to the method of Patent Document 1, the above problem can be solved. However, 3×18 times of matrix calculation are necessary in addition to the three-dimensional matrix calculation and many multipliers and comparators to obtain the operands are further necessary. Therefore, the amount of calculation and the scale of the circuit become large. When the apparatus is realized by a LUT, a large-capacity memory of 50MB is necessary.

The present invention has been made considering the above problems and the object thereof is to provide: a color converting apparatus that can correct hue shifts without narrowing the color reproduction region, in addition, that needs small amount of calculation and small scale of circuit, and that does not need many memory sources; a computer program therefor; an image display device including the color converting apparatus; and a mobile terminal device including the image display device as a display means thereof.

MEANS FOR SOLVING THE PROBLEMS

To solve the above problems, a color converting apparatus is provided that creates second color information by converting first color information, wherein the first color information and the second color information respectively include data of a plurality of colors that each are independently controllable, and wherein a different color conversion is enabled for each area that is classified based on a relation of magnitude among data of a plurality of colors that the first color information includes and a relation of magnitude among addition result of results of multiplying the plurality of color data respectively by arbitrary constants.

A second technical means is a color converting apparatus that creates the second color information by converting the first color information, wherein the first color information and the second color information respectively include data of three colors that each is independently controllable, and wherein a different color conversion is enabled for each of 12 areas that are classified based on a relation of magnitude among data of three colors that the first color information includes and a relation of magnitude among minimum value of the data of the three colors and addition result of the results of multiplying the other two data except the minimum value respectively by arbitrary constants.

A third technical means is a color converting apparatus wherein the same color conversion is executed for at least three pairs of six pairs each comprising two adjacent areas that are classified based on the relation of magnitude among the minimum value of the three color data, and the addition result of the results of multiplying the other two data respectively by an arbitrary constants, of the 12 areas.

A fourth technical means is the color converting apparatus as defined in the second or third technical means, wherein the color conversion for the each area is executed by three-dimensional matrix calculation.

A fifth technical means is a computer program that executes a color conversion by creating second color information by converting first color information, wherein the first color information and the second color information respectively include data of a plurality of colors that each are independently controllable, and wherein a different color conversion is enabled for each area that is classified based on relation of magnitude among data of a plurality of colors that the first color information includes and a relation of magnitude among addition result of results of multiplying the plurality of color data respectively by arbitrary constants.

A sixth technical means is a computer program that executes a color conversion by creating second color information by converting first color information, wherein the first color information and the second color information respectively include data of three colors that each is independently controllable, and wherein a different color conversion is enabled for each of 12 areas that are classified based on a relation of magnitude among data of three colors that the first color information includes and a relation of magnitude among minimum value of the data of three colors and addition result of the results of multiplying the other two data except the minimum value respectively by arbitrary constants.

A seventh technical means is an image display device comprising the color converting apparatus as defined in any one of the first to the fourth technical means.

An eighth technical means is a mobile terminal device comprising the image display device as defined in the seventh technical means as a display means.

EFFECT OF THE INVENTION

A color converting apparatus of the present invention is a color converting apparatus that creates second color information by converting first color information, wherein the first color information and the second color information respectively include data of a plurality of colors that each are independently controllable, and wherein a different color conversion is enabled for each area that is classified based on the relation of magnitude among the data of the plurality of colors that the first color information includes and the relation of magnitude among the addition result of the results of multiplying a plurality of color data respectively by arbitrary constants. Thereby, there can be provided a color converting apparatus that can correct hue shifts without narrowing the color reproduction region.

The color converting apparatus of the present invention is a color converting apparatus, wherein the first color information and the second color information respectively include data of three colors that each is independently controllable, and wherein a different color conversion is enabled for each of 12 areas that are classified based on the relation of magnitude among the data of the three colors that the first color information includes and the relation of magnitude among the minimum value of the data and the addition result of the results of multiplying the other two data, respectively by arbitrary constants. Thereby, there can be provided a color converting apparatus that can correct hue shifts without narrowing the color reproduction region.

The same color conversion is executed for at least three pairs of six pairs each including two adjacent areas that are classified based on the relation of magnitude among the minimum value of the data of the three colors that the first color information includes and the addition result of the results of multiplying other two data respectively by an arbitrary constants, of the 12 areas. Thereby, the scale of the circuit can be made smaller and can be downsized.

The color conversion for each of the areas is executed by three-dimensional matrix calculation. Thereby, the scale of the circuit can be made smaller and can be downsized.

A computer program of the present invention is a program wherein the first color information and the second color information respectively include data of a plurality of colors that each is independently controllable, and wherein a different color conversion is enabled for each area that is classified based on the relation of magnitude among the data of the plurality of colors included in the first color information and the relation of magnitude among the addition result of the results of multiplying the plurality of color data respectively by arbitrary constants. Thereby, hue shifts can be corrected without narrowing the color reproduction region.

A computer program of the present invention is a program wherein the first color information and the second color information respectively include data of three colors that each is independently controllable, and wherein a different color conversion is enabled for each of 12 areas that are classified based on the relation of magnitude among the data of the three colors included in the first color information and the relation of magnitude among the minimum value of the data and the addition result of the results of multiplying other two data except the minimum value, respectively by arbitrary constants. Thereby, hue shifts can be corrected without narrowing the color reproduction region.

According to an image display device, by including therein the color converting apparatus that can correct hue shifts without narrowing the color reproduction region and that can make the scale of the circuit smaller and downsize, a vivid image can be displayed that gives no feeling of unnaturalness caused by the hue shifts and that widely uses the original color reproduction region of the image display device.

According to a mobile terminal device of the present invention, by including therein the image display device, a vivid image can be displayed that gives no feeling of unnaturalness caused by the hue shifts and that widely uses the original color reproduction region of the image display device, suppressing the scale of the circuit and the power consumption thereof.

BRIEF DESCRIPTION OF THE DRAWINGS

[Fig. 1] Fig. 1 is a block diagram of the schematic configuration of a first embodiment of a color converting apparatus according to the present invention.

[Fig. 2] Figs. 2(A) and 2(B) respectively are a chromaticity chart and a table of areas obtained by classifying the color reproduction region of an arbitrary display device based on the relation of magnitude of input RGB values.

[Fig. 3] Fig. 3 is a block diagram of the schematic configuration of a primary area detector shown in Fig. 1.

[Fig. 4] Fig. 4 is a block diagram of an example of the input/output relations of comparators 20 to 22 shown in Fig. 3.

[Fig. 5] Fig. 5 is a table of the relations of areas corresponding to outputs $\alpha$, $\beta$, and $\gamma$ of the comparators 20 to 22 shown in Fig. 3.

[Fig. 6] Fig. 6 is a block diagram of operations of a switch 25 shown in Fig. 3.

[Fig. 7] Fig. 7 is a block diagram of operations of a switch 26 shown in Fig. 3.

[Fig. 8] Figs. 8(A) and 8(B) respectively are a chromaticity chart and a table of areas obtained by dividing the areas of Fig. 2 into two.

[Fig. 9] Fig. 9 is a chromaticity chart of an example of area division when a parameter is set that determines a border value such that $A_1$ is wider than $A_2$.

[Fig. 10] Fig. 10 is a chromaticity chart of an example of area division when a parameter is set that determines a border value such that $A_2$ is wider than $A_1$.

[Fig. 11] Fig. 11 is a chromaticity chart showing a shift between a green hue axis of a white-LED backlight display device and a targeted NTSC green hue axis before the color conversion by the color converting apparatus according to the present invention is executed.

[Fig. 12] Fig. 12 is a chromaticity chart showing the state where the green hue axis of the white-LED backlight display device and the NTSC hue axis are coincided by the color conversion by the color converting apparatus according to the present invention.

[Fig. 13] Fig. 13 is a chromaticity chart showing an exemplary color reproduction region of a white-LED backlight display device and an NTSC color reproduction region that is the target of the hues after conversion, after the color conversion by the color converting apparatus according to the present invention is executed for the hues.

[Fig. 14] Fig. 14 is a chromaticity chart showing an exemplary color reproduction region of the white-LED backlight display device and an NTSC color reproduction region that is the target of the hues after changing, after the color conversion by the color converting apparatus according to the present invention is executed for the color saturation.

[Fig. 15] Fig. 15 is a flowchart of the flow of operations of a color converting method of the present invention.

[Fig. 16] Fig. 16 is a flowchart of the flow of a primary area detecting operation of the color converting method according to the present invention.

[Fig. 17] Fig. 17 is a flowchart of the flow of a secondary area detecting operation of the color converting method according to the present invention.

[Fig. 18] Fig. 18 is a flowchart of the flow of a color converting operation by area of the color converting method according to the present invention.

[Fig. 19] Fig. 19 is a chromaticity chart of an exemplary color reproduction region of a white-LED backlight display device and an NTSC color reproduction region.

[Fig. 20] Fig. 20 is a block diagram of an exemplary schematic configuration of the matrix calculator shown in Fig. 1.

[Fig. 21] Fig. 21 is a chromaticity chart of the color reproduction region of the white-LED backlight display device obtained when the hue axes are matched according to NTSC by a conventional method.

[Fig. 22] Fig. 22 is a block diagram of the configuration of a conventional color converting apparatus that can match the hue axes thereof according to NTSC.

[Fig. 23] Fig. 23 is a chromaticity chart of variation of hue axes by a color converting apparatus shown in Fig. 22.

EXPLANATIONS OF REFERENCE NUMERALS

10... primary area detector, 11... border coefficient table, 12... comparator, 13... matrix coefficient table, 14... matrix calculator, 15, 16, 17... multiplier, 18... adder, 20, 21, 22... comparator, 23, 24... shift calculator, 25, 26... switch, 27... adder, 1300 to 1308... multiplier, 1309 to 1311... adder, 181... $\alpha\beta$ calculator, 182... hue data calculator, 183... polynomial calculator, 184... matrix calculator, 185... coefficient generator, 186... synthesizer.

PREFERRED EMBODIMENTS OF THE INVENTION

Referring to the drawings, description will be given in detail for embodiments of the present invention.

[First Embodiment]

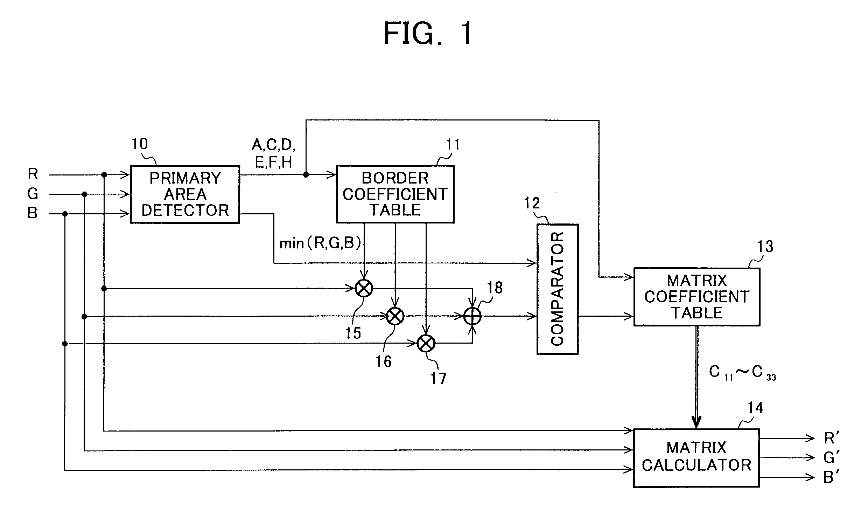

Fig. 1 is a block diagram of the schematic configuration of a first embodiment of a color converting apparatus according to the present invention. As shown in Fig. 1, the color converting apparatus of the first embodiment includes a primary area detector 10, a border coefficient table 11, a comparator 12, a matrix coefficient table 13, a matrix calculator 14, multipliers 15 to 17, and an adder 18.

The primary area detector 10 determines which of six areas classified based on the relation of magnitude of RGB belong to and outputs the minimum value of the three RGB values.

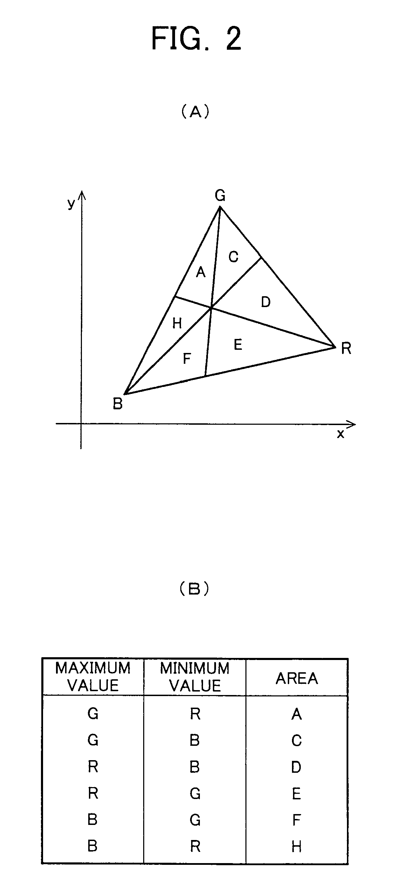

A color region that input RGB values can realize expression can be divided into six areas of "A", "C", "D", "E", "F", and "H" shown in Fig. 2 (A). Hereinafter, these six areas are collectively referred to as "primary areas". The relation between the maximum value and the minimum value of the RGB, and the areas shown in Fig. 2(A) is as shown in Fig. 2(B).

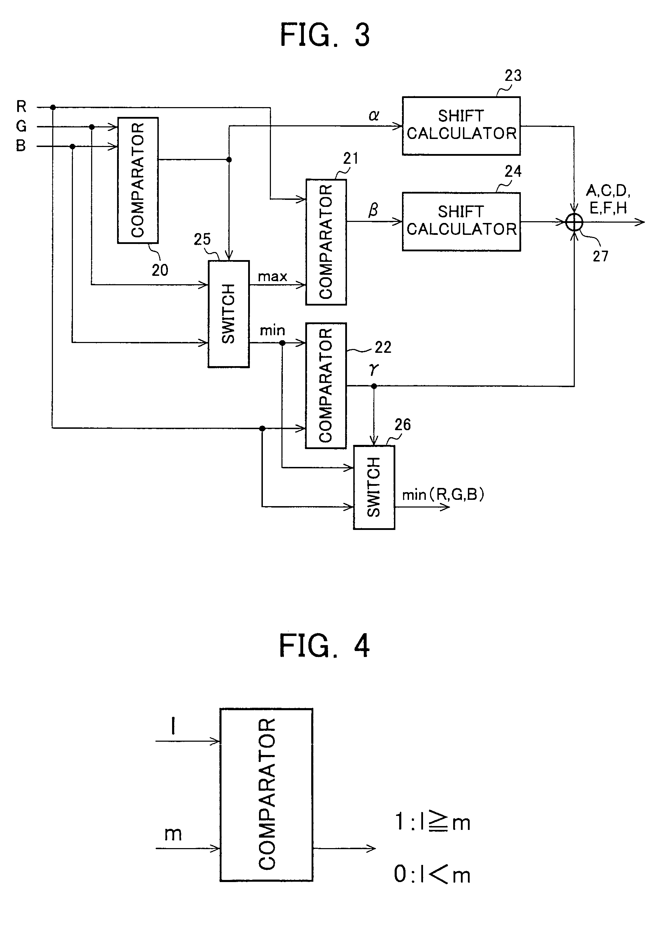

An exemplary configuration of the primary area detector 10 is shown in Fig. 3. Three comparators are provided and identification of areas is enabled by each comparison result. As shown in Fig. 4, all of the comparators 20 to 22 respectively compare an input "1" upper in the Fig. 4 with an input "m" lower in Fig. 4. "One" is output when l≧m. "Zero" is output when l≦m.

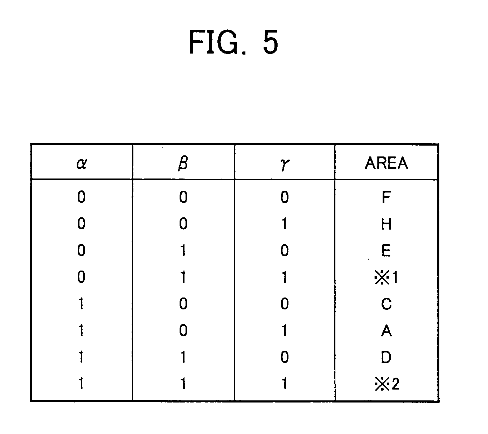

The relation between the values of outputs $\alpha$, $\beta$, and $\gamma$ respectively of the comparators and the areas A, C, D, E, F, and H shown in Fig. 2(A) is shown in Fig. 5. The areas A, C, D, E, F, and H can be identified by combinations of the outputs α, β, and γ respectively of the comparators 20 to 22. However, a combination denoted by "*1" in Fig. 5 is an error because the occurrence conditions thereof are G<B, B≤R, and R≤G. A combination denoted by "*2" occurs only when R=G=B and is included in any area.

The output α of the comparator 20 is shifted by the shift calculator 23 by two bits and the output β of the comparator 21 is shifted by the shift calculator 24 by one bit, and the shifted outputs are added to the output γ of the comparator 22 and the added value is output from the primary area detector 10 as a three-bit parameter indicating an area. The relation between the output three-bit parameter and the area is as shown in Fig. 5.

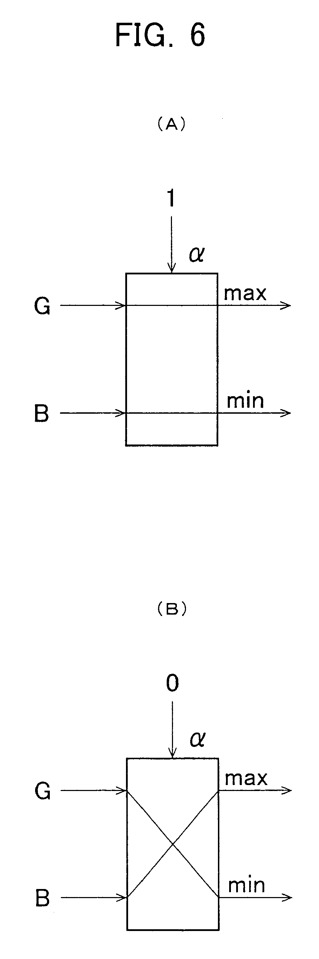

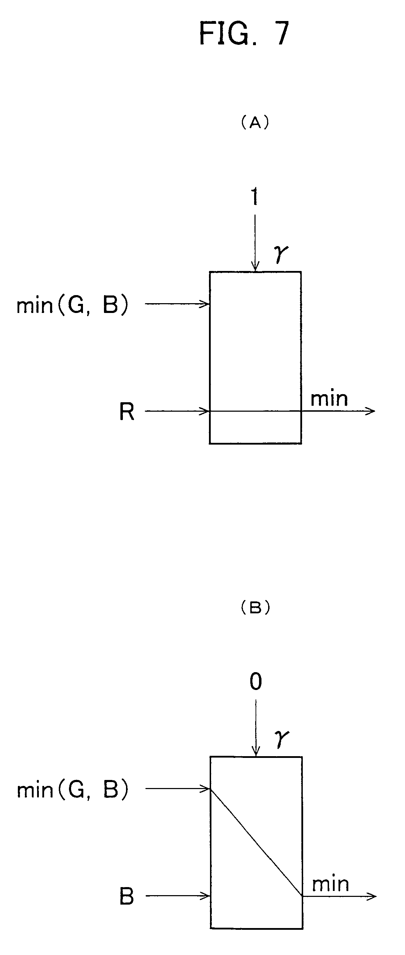

As shown in Figs. 6 and 7, each of switches 25 and 26 switches the outputs according to the inputs α and β. The output of the switch 26 is the minimum value of the RGB.

Description has been given in detail for the configuration and the operation of the primary area detector 10. The above example is one example and, when a detector can detect a primary area that the input RGB value belongs to and can output the minimum value of the RGB, the embodiment is not limited to the above example.

The border coefficient table 11 is output from the primary area detector 10. The primary area detector 10 outputs a coefficient that determines the border to further divide, into two, six primary areas determined according to the parameters indicating the primary areas that the input RGB values belong to.

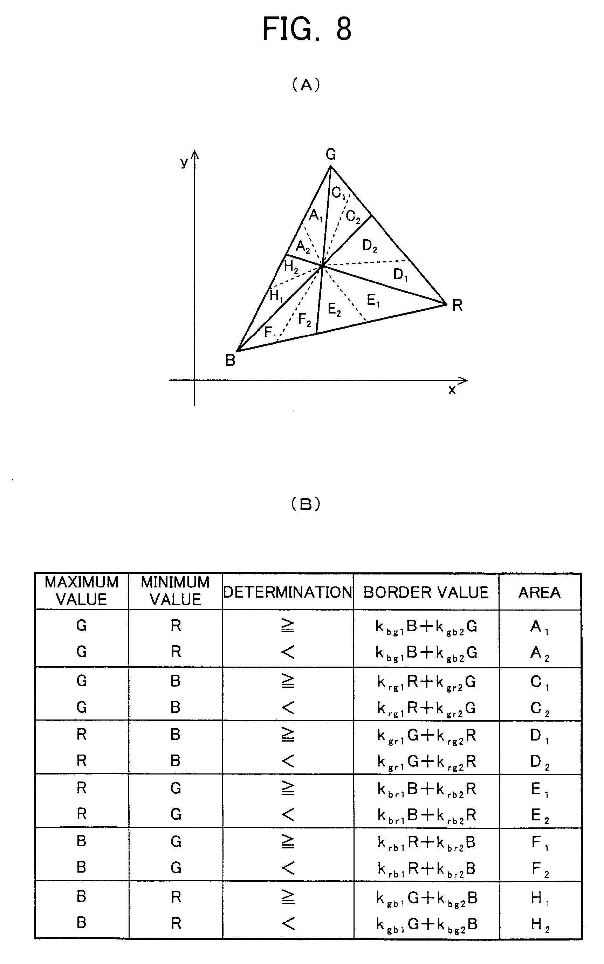

The primary areas are respectively divided into pairs each including two areas as shown in Fig. 8(A) based on the comparison between the calculation result of the coefficient output by the border coefficient table 11 and the RGB values, and the RGB minimum value output by the primary area detector 10. Each area obtained by further dividing each of the primary areas that are six areas into two, resulting in a total of 12 areas, is referred to as "secondary area". It is assumed that coefficients $k_{bg1}$, $k_{gb2}$, $k_{rg1}$, $k_{gr2}$, $k_{gr1}$, $k_{rg2}$, $k_{br1}$, $k_{rb2}$, $k_{rb1}$, $k_{br2}$, $k_{gb1}$, and $k_{bg2}$, that determine the border values in Fig. 8(A) satisfy the conditions of Equations (4) and (5).

$$k_{ij1} + k_{ji2} = 1 \quad \ldots (4)$$

$$K_{ji2} \leq 0 \quad \ldots (5)$$

Where each of i and j is any one of r, g, and b. The relation between the maximum value, the minimum value, determination (comparison of the minimum value and the border value), and the border value of the RGB; and areas shown in Fig. 8 (A) is shown in Fig. (B).

Denoting the primary area determination result as "X", which of secondary areas $X_1$ and $X_2$ the input RGB signal belongs to is determined by the determination of Equation (6).

$$k_{ij1} \times Mid + k_{ji2} \times Max \leq Min \quad \ldots (6)$$

Where "Max" is the maximum values of R, G, and B, "Min" is the minimum value thereof, "Mid" is the remaining one value that is not the maximum value and is not the minimum value when the three values of RGB are compared with each other. When Equation (6) holds, the input RGB signal belongs to the secondary area $X_1$ and, in other cases, the signal belongs to $X_2$.

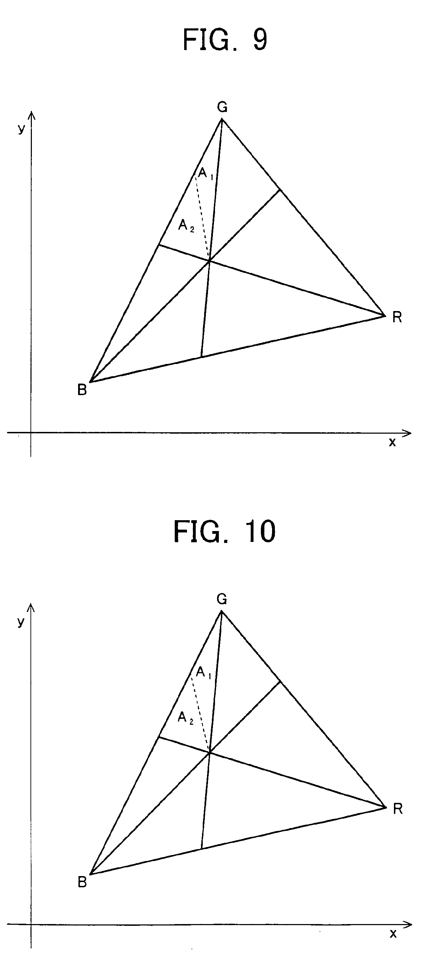

According to the above area division, a color reproduction region is divided into a total of 12 areas. The border values vary according to the values of the coefficients $k_{bg1}$, $k_{gb2}$, $k_{rg1}$, $k_{gr2}$, $k_{gr1}$, $k_{rg2}$, $k_{br1}$, $k_{rb2}$, $k_{rb1}$, $k_{br2}$, $k_{gb1}$, and $k_{bg2}$. For example, assuming that $k_{bg1}$=1.2 and $k_{gb2}$=-0.2 in an area "A", the regions of an area "$A_1$" and an area "$A_2$" are as shown in Fig. 9. Whereas, assuming that $k_{bg1}$=2 and $k_{gb2}$=-1, the regions of the area "$A_1$" and the area "$A_2$" are as shown in Fig. 10. As above, the border of an area can be arbitrarily set by the setting of the coefficients in the border coefficient table 11.

The coefficients output by the border coefficient table 11 and the RGB values are multiplied by the multipliers 15 to 17 and, thereafter, the multiplication results are added by the adder 18 . The comparator 12 compares the addition result with the RGB minimum value output by the primary area detector 10. It is assumed that the comparator 12 outputs, for example, one when l≥m and zero when l≤m similarly to the comparators 20 to 22 shown in Fig. 4. The "determination" shown in Fig. 8(B) corresponds to the operation of the comparator 12. When the output is one, this represents that the input RGB values are included in the area of $X_1$ shown in Fig. 8(A). When the output is zero, this represents that the input RGB values are included in the area of $X_2$. X is any one of A, C, D, E, F, and H. The comparison result is input into the matrix coefficient table 13.

The matrix coefficient table 13 outputs coefficients for matrix calculation that converts from the parameter representing a primary area output from the primary area detector 10 and the comparison result by the comparator 12 to output R'G'B' values corresponding to an area that includes the input RGB values.

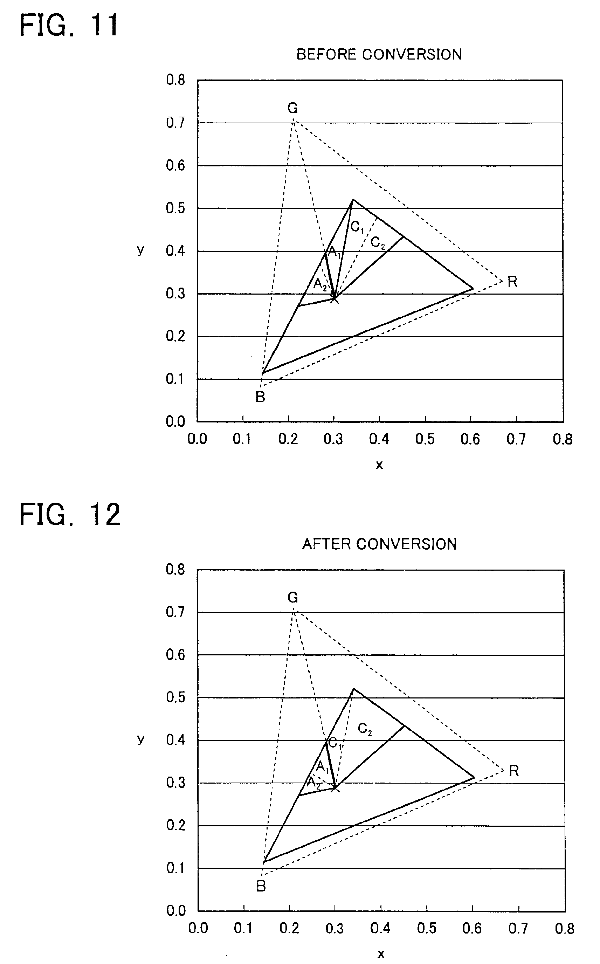

Suitably changing the coefficients for the matrix calculation for each of the 12 areas enables a conversion that arbitrarily adjusts the hues that the R'G'B' values after the conversion show, and that does not narrow the color reproduction region. Referring to Figs. 11 and 12, description will be given for the converting method.

Fig. 11 is an example of a color reproduction region of a display device using a white-LED backlight. In Fig. 11, a triangle of a solid line is the color reproduction region of the display device and a triangle of a dotted line is the color reproduction region of NTSC. As above, because the white LED only has a peak in the short wavelength region, the green and red color reproduction regions of the white LED are narrow and, in the example of Fig. 11, the green hue axis is significantly shifted to red direction compared to NTSC and green of the white LED practically is yellowish green.

To match the green hue axis of NTSC represented by a thick solid line in Fig. 11, as shown in Fig. 12, a conversion only has to be executed that narrows the areas $A_1$ and $A_2$ toward blue direction, that moves an area $C_1$ between the original green hue axis and the hue axis after the conversion, and that expands an area $C_2$ to the extent of the original green hue axis. This conversion is realized by, for example, Equations (7) to (9).

·area $A_1$, $A_2$ (G=max, R=min)

$$[\text{Equation 4}]$$

$$\begin{pmatrix} R' \\ G' \\ B' \end{pmatrix} = \begin{pmatrix} 1 & 0 & 0 \\ 0 & 1 & 0 \\ 0 & h & 1-h \end{pmatrix} \times \begin{pmatrix} R \\ G \\ B \end{pmatrix} \quad \cdots (7)$$

·area $C_2$ (G=max, B=min, $B<k_{rg1}\times R+k_{gr2}\times G$)

$$[\text{Equation 5}]$$

$$\begin{pmatrix} R' \\ G' \\ B' \end{pmatrix} = \begin{pmatrix} k_{rg1} & -k_{rg2} & 0 \\ 0 & 1 & 0 \\ 0 & 0 & 1 \end{pmatrix} \times \begin{pmatrix} R \\ G \\ B \end{pmatrix} \quad \cdots (8)$$

·area $C_1$ (G=max, B=min, $B>k_{rg1}\times R+k_{gr2}\times G$)

$$[\text{Equation 6}]$$

$$\begin{pmatrix} R' \\ G' \\ B' \end{pmatrix} = \begin{pmatrix} 0 & 0 & 1 \\ 0 & 1 & 0 \\ -h \cdot k_{rg1}/k_{rg2} & h & 2-h \end{pmatrix} \times \begin{pmatrix} R \\ G \\ B \end{pmatrix} \quad \cdots (9)$$

Where h is a constant that determines the position of the green hue axis after the conversion and that is $0 \leq h \leq 1$.

According to the conversions of Equations (7) to (9), when (R, G, B)=(0, g, 0) is input as the input RGB values, the output thereof is (R', G', B')=(0, g, h·g). By selecting a proper krg1 such that the output is positioned on the NTSC green hue axis, the green hue axis can be matched with that of NTSC.

When (R, G, B)=(-g·$k_{rg2}$/$k_{rg1}$, g, 0) is input, the output is (R' G' B')=(0, g, 0) and a color that corresponds to a top portion at outermost side of the color reproduction region can be displayed.

The matrix calculator 14 executes a conversion from the input RGB values by the three-dimensional matrix calculation into the output R' G' B' according to the coefficient for the matrix calculation output by the matrix coefficient table 13. The matrix calculator 14 is realized by, for example, a combination of multipliers and adders as shown in Fig. 20. Fig. 20 is only an example of the configuration and any configuration that can realize the three-dimensional matrix calculation may be used.

Though the above conversion has been described for the case where the green hue axis is matched, the red and blue hue axes can also be matched in the same method.

An example of the above conversion of the present embodiment is shown in Fig. 13. Fig. 13 is a simulation result for the case where the hue axes are matched with those of NTSC represented by a dotted line in a display device having a color reproduction region represented by a solid line in Fig. 19. As shown in Fig. 13, the hue axes are matched with those of NTSC and the color reproduction region can maintain the original extent.

Though the color region is divided into 12 areas and a conversion that is different for each area is executed to each area in the above description, three pairs of areas occurs that the same conversion is executed as expressed in Equation (7). The number of pairs of areas that the same conversion is executed differs depending on the direction of the rotation of the hue axes. However, the same conversion is always executed to three pairs of adjacent areas when three apexes are three points. Utilizing this fact, the number of patterns of conversion is determined to be nine and the sizes of the border coefficient table 11 and the matrix coefficient table 13 can be saved.

Though description has been given above for the case where the hues are matched, according to the color converting apparatus of the present invention, color saturation enhancement can be executed only to a specific hue region by the setting of the coefficients read from the matrix coefficient table 13.

For example, when the color saturation of an area (an area D) spanning from red to yellow, that is a little narrower than that of NTSC in the color reproduction region of Fig. 19, is enhanced, the color saturation can be partially enhanced as shown in Fig. 14 by conversions of Equations (10) and (11).

·area $D_1$ (R=max, B=min, B<$k_{gr1}$×G+$k_{rg2}$×R)

$$[\text{Equation } 7]$$

$$\begin{pmatrix} R' \\ G' \\ B' \end{pmatrix} = \begin{pmatrix} 1 & 0 & 0 \\ 0 & 1 & 0 \\ a & -a & 1 \end{pmatrix} \times \begin{pmatrix} R \\ G \\ B \end{pmatrix} \quad \cdots (10)$$

·area $D_2$ (R=max, B=min, B≥$kg_{gr1}$×G+$k_{rg2}$×R)

$$[\text{Equation } 8]$$

$$\begin{pmatrix} R' \\ G' \\ B' \end{pmatrix} = \begin{pmatrix} 1 & 0 & 0 \\ 0 & 1 & 0 \\ 0 & a/(k_{gr1}-1) & 1-a/(k_{gr1}-1) \end{pmatrix} \times \begin{pmatrix} R \\ G \\ B \end{pmatrix} \quad \cdots (11)$$

Where "a" is an arbitrary constant. The degree of color saturation enhancement is determined according to the value of "a". When color saturation is enhanced as shown in Fig. 14, "a" is a<0. When "a" is a>0, the color saturation can be weakened. Because the capacity of the display device is limited within the solid line of Fig. 14, the portion exceeding this limit can not actually be displayed and the gradation thereof is lost.

A substantial middle between red and yellow is a peak of the color saturation enhancement in the example of Fig. 14. According to the conversion of Equations (10) and (11), the position of the peak corresponds to the border between areas $D_1$ and $D_2$. The border between the areas $D_1$ and $D_2$ can be arbitrarily changed using the coefficient $k_{gr1}$ and, by changing the border, the peak position can be arbitrarily changed.

Though the border of the areas $D_1$ and $D_2$ is the peak in the embodiment, a conversion that takes other border as the peak can be executed in the same method.

Though the above description has been given taking as an example the case where the RGB data representing the colors of red, green, and blue are the input, the conversion can also be executed with a combination of other three colors.

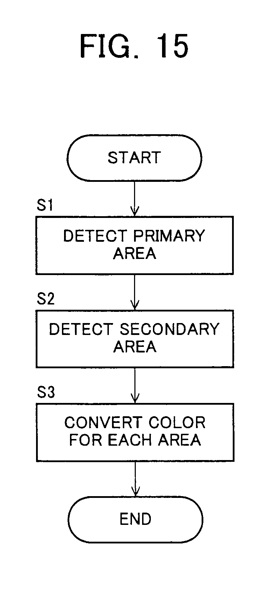

Fig. 15 is a flowchart of the flow of the operations of the color converting method according to the present invention.

The primary area detector 10 of the image display device detects which of the six areas (primary areas) classified based on the relation of magnitude of RGB the input RGB values belong to (step S1) . In this case, the primary area detector 10 further outputs the minimum value of the RGB.

The border coefficient table 11 outputs coefficients that define the borders to further divide each of the determined six primary areas into two according to a parameter that is input from the primary area detector 10 and that indicates the primary area to which the input RGB values belong to. The coefficients output by the border coefficient table 11 and the RGB values are added after multiplication thereof. The comparator 12 compares the addition result with the RGB minimum value output from the primary area detector 10, and the comparison result is input into the matrix coefficient table 13. With this comparison result, a secondary area that includes the RGB values to be input can be detected (step S2).

The matrix coefficient table 13 outputs the coefficients for the matrix calculation to convert from the parameter indicating the primary area and the comparison result by the comparator 12 into the output R', G', and B' values corresponding to the area that the input RGB values belong to. Thereby, the matrix calculator 14 executes a color conversion by area that arbitrarily adjusts the hues that the R', G', and B' values after the conversion represent, by suitably changing the coefficient for the matrix calculation for each of the 12 areas (step S3).

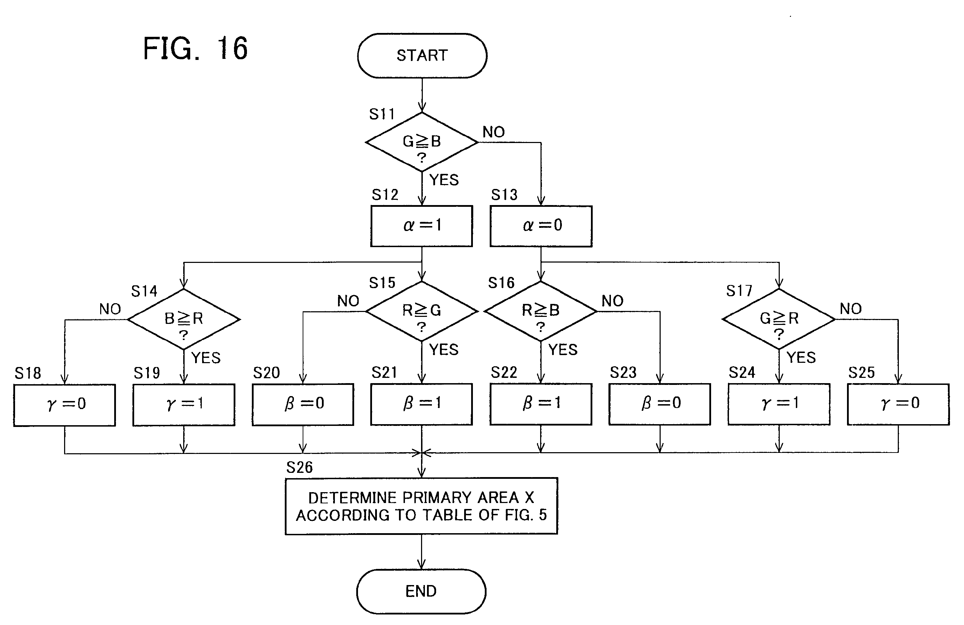

Fig. 16 is a flowchart of the flow of a primary area detecting operation of the color converting method according to the present invention. In Fig. 16, the three comparators are provided for the primary area detector 10 and area identification is executed according to the comparison result of each of the comparators.

Whether the G value and the B value of the input RGB values are $G \geq B$ is determined (step S11) . When $G \geq B$, the output $\alpha$ thereof is one (step S12). Whether $B \geq R$ is determined (step S14) and whether $R \geq G$ is determined (step S15).

When the B value and the R value are not $B \geq R$, $\gamma=0$ (step S18). When $B \geq R$, $\gamma=1$ (step S19). When the R value and the G value are not $R \geq G$, $\beta=0$ (step S20). When $R \geq G$, $\beta=1$ (step S21).

When the G value and the B value are not $G \geq B$ in the above step S11, $\alpha$ becomes $\alpha=0$ (step S13) and whether $R \geq B$ is determined (step S16), and $G \geq R$ is further determined (step S17). When $R \geq B$, $\beta=1$ (step S22). When the R value and the B value are not $R \geq B$, $\beta=0$ (step S23). When $G \geq R$, $\gamma=1$ (step S24). When the G value and the R value are not $G \geq R$, $\gamma=0$ (step S25).

Due to the above process, according to the outputs $\alpha$, $\beta$, and $\gamma$ respectively of the comparators, the area X (an primary area) can be determined based on the combinations in the table shown in Fig. 5 (step S26).

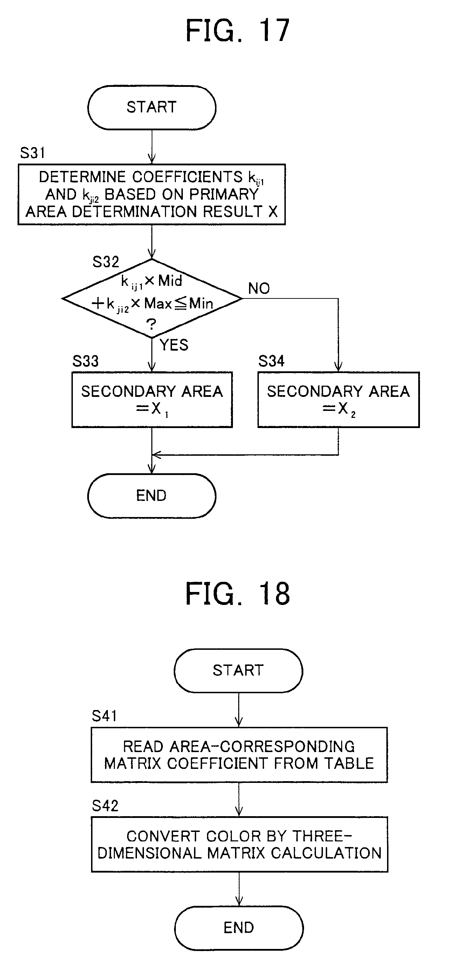

Fig. 17 is a flowchart of the flow of a secondary area detecting operation of the color converting method according to the present invention. Based on the primary area determination result X of Fig. 16, the coefficients $k_{ij1}$ and $k_{ji2}$ are determined (step S31). Whether a discriminant $k_{ij1} \times Mid + k_{ji2} \times Max \leq Min$ holds is determined (step S32) . In this case: "Max" is the maximum value of R, G, and B; "Min" is the minimum value; and "Mid" is the remaining one value that is not the maximum value and is not the minimum value when the three values of R, G, and B are compared.

When the above discriminant holds, it is determined that the input RGB signal belongs to the secondary area $X_1$ (step S33). When the above discriminant does not hold, it is determined that the input RGB signal belongs to the secondary area $X_2$ (step S34).

Fig. 18 is a flowchart of the flow of a color converting operation by area of the color converting method according to the present invention. A matrix coefficient corresponding to the area that includes the input RGB values is read from a table (matrix coefficient table) (step S41) and color conversion by the three-dimensional matrix calculation is executed (step S42).

The color converting apparatus in the above embodiment is most preferably configured to execute the optimal conversion for a display device by combining the display device. However, in addition, the color converting apparatus can be used for the case where the color conversion is executed by user operations using a portable or a desk-top personal computer.

The present invention of the application surely is not limited to the configuration of the above embodiment and can be freely changed and implemented within the scope thereof.


**Claims**

**1.** A color converting apparatus that creates second color information by converting first color information, wherein
   the first color information and the second color information respectively include data of a plurality of colors that each are independently controllable, and wherein
   a different color conversion is enabled for each area that is classified based on a relation of magnitude among data of a plurality of colors that the first color information includes and a relation of magnitude among addition result of results of multiplying the plurality of color data respectively by arbitrary constants.

2. A color converting apparatus that creates the second color information by converting the first color information, wherein the first color information and the second color information respectively include data of three colors that each is independently controllable, and wherein a different color conversion is enabled for each of 12 areas that are classified based on a relation of magnitude among data of three colors that the first color information includes and a relation of magnitude among minimum value of the data of the three colors and addition result of the results of multiplying the other two data except the minimum value respectively by arbitrary constants.

3. The color converting apparatus as defined in claim 2, wherein the same color conversion is executed for at least three pairs of six pairs each comprising two adjacent areas that are classified based on the relation of magnitude among the minimum value of the three color data, and the addition result of the results of multiplying the other two data respectively by an arbitrary constants, of the 12 areas.

4. The color converting apparatus as defined in claim 2 or 3, wherein the color conversion for the each area is executed by three-dimensional matrix calculation.

5. A computer program that executes a color conversion by creating second color information by converting first color information, wherein the first color information and the second color information respectively include data of a plurality of colors that each are independently controllable, and wherein a different color conversion is enabled for each area that is classified based on relation of magnitude among data of a plurality of colors that the first color information includes and a relation of magnitude among addition result of results of multiplying the plurality of color data respectively by arbitrary constants.

6. A computer program that executes a color conversion by creating second color information by converting first color information, wherein the first color information and the second color information respectively include data of three colors that each is independently controllable, and wherein a different color conversion is enabled for each of 12 areas that are classified based on a relation of magnitude among data of three colors that the first color information includes and a relation of magnitude among minimum value of the data of three colors and addition result of the results of multiplying the other two data except the minimum value respectively by arbitrary constants.

7. An image display device comprising the color converting apparatus as defined in any one of claims 1 to 4.

8. A mobile terminal device comprising the image display device as defined in claim 7 as a display means.

# FIG. 1

# FIG. 2

(A)

(B)

| MAXIMUM VALUE | MINIMUM VALUE | AREA |
|:---:|:---:|:---:|
| G | R | A |
| G | B | C |
| R | B | D |
| R | G | E |
| B | G | F |
| B | R | H |

# FIG. 3

# FIG. 4

$$1 : l \geqq m$$

$$0 : l < m$$

# FIG. 5

| $\alpha$ | $\beta$ | $\gamma$ | AREA |
|:---:|:---:|:---:|:---:|
| 0 | 0 | 0 | F |
| 0 | 0 | 1 | H |
| 0 | 1 | 0 | E |
| 0 | 1 | 1 | ※1 |
| 1 | 0 | 0 | C |
| 1 | 0 | 1 | A |
| 1 | 1 | 0 | D |
| 1 | 1 | 1 | ※2 |

# FIG. 6

（A）

（B）

# FIG. 7

(A)

```
                          1
                          ↓ γ
                     ┌─────────┐
   min(G, B) ───────→│         │
                     │         │
                     │         │      min
           R ───────→│         │─────────→
                     └─────────┘
```

(B)

```
                          0
                          ↓ γ
                     ┌─────────┐
   min(G, B) ───────→│╲        │
                     │ ╲       │
                     │  ╲      │
                     │   ╲     │      min
           B ───────→│    ╲    │─────────→
                     └─────────┘
```

# FIG. 8

(A)

(B)

| MAXIMUM VALUE | MINIMUM VALUE | DETERMINATION | BORDER VALUE | AREA |
|---|---|---|---|---|
| G | R | $\geqq$ | $k_{bg1}B + k_{gb2}G$ | $A_1$ |
| G | R | $<$ | $k_{bg1}B + k_{gb2}G$ | $A_2$ |
| G | B | $\geqq$ | $k_{rg1}R + k_{gr2}G$ | $C_1$ |
| G | B | $<$ | $k_{rg1}R + k_{gr2}G$ | $C_2$ |
| R | B | $\geqq$ | $k_{gr1}G + k_{rg2}R$ | $D_1$ |
| R | B | $<$ | $k_{gr1}G + k_{rg2}R$ | $D_2$ |
| R | G | $\geqq$ | $k_{br1}B + k_{rb2}R$ | $E_1$ |
| R | G | $<$ | $k_{br1}B + k_{rb2}R$ | $E_2$ |
| B | G | $\geqq$ | $k_{rb1}R + k_{br2}B$ | $F_1$ |
| B | G | $<$ | $k_{rb1}R + k_{br2}B$ | $F_2$ |
| B | R | $\geqq$ | $k_{gb1}G + k_{bg2}B$ | $H_1$ |
| B | R | $<$ | $k_{gb1}G + k_{bg2}B$ | $H_2$ |

# FIG. 9

# FIG. 10

## FIG. 11

**BEFORE CONVERSION**

## FIG. 12

**AFTER CONVERSION**

# FIG. 13

AFTER CONVERSION

# FIG. 14

AFTER CONVERSION

# FIG. 15

```
        ┌─────────────┐
        │    START    │
        └─────────────┘
               │
  S1           ▼
   ┌───────────────────────┐
   │   DETECT PRIMARY      │
   │        AREA           │
   └───────────────────────┘
               │
  S2           ▼
   ┌───────────────────────┐
   │  DETECT SECONDARY     │
   │        AREA           │
   └───────────────────────┘
               │
  S3           ▼
   ┌───────────────────────┐
   │   CONVERT COLOR       │
   │   FOR EACH AREA       │
   └───────────────────────┘
               │
               ▼
        ┌─────────────┐
        │     END     │
        └─────────────┘
```

FIG. 16

START

S11 G≧B ? NO / YES

S12 $\alpha = 1$     S13 $\alpha = 0$

S14 B≧R ? NO / YES

S15 R≧G ? NO / YES

S16 R≧B ? NO / YES

S17 G≧R ? NO / YES

S18 $\gamma = 0$

S19 $\gamma = 1$

S20 $\beta = 0$

S21 $\beta = 1$

S22 $\beta = 1$

S23 $\beta = 0$

S24 $\gamma = 1$

S25 $\gamma = 0$

S26 DETERMINE PRIMARY AREA X ACCORDING TO TABLE OF FIG. 5

END

EP 1 857 973 A1

# FIG. 17

START

S31

DETERMINE COEFFICIENTS $k_{ij1}$ AND $k_{ji2}$ BASED ON PRIMARY AREA DETERMINATION RESULT X

S32

$k_{ij1} \times Mid + k_{ji2} \times Max \leqq Min$ ?

NO

YES

S33

SECONDARY AREA $= X_1$

S34

SECONDARY AREA $= X_2$

END

# FIG. 18

START

S41

READ AREA-CORRESPONDING MATRIX COEFFICIENT FROM TABLE

S42

CONVERT COLOR BY THREE-DIMENSIONAL MATRIX CALCULATION

END

# FIG. 19

BEFORE CONVERSION

# FIG. 20

## FIG. 21

AFTER CONVERSION

## FIG. 22

# FIG. 23

(A)

(B)

## INTERNATIONAL SEARCH REPORT

| | International application No. |
|---|---|
| | PCT/JP2006/300720 |

A.  CLASSIFICATION OF SUBJECT MATTER
*G06T1/00*(2006.01),          *G09G3/20*(2006.01),          *G09G3/36*(2006.01),
*H04N1/60*(2006.01),
*H04N1/46*(2006.01), *H04N9/67*(2006.01)

B.  FIELDS SEARCHED

Minimum documentation searched (classification system followed by classification symbols)
G06T1/00, G09G3/20, G09G3/36, H04N1/46, H04N1/60, H04N9/67

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)
JSTPlus(JOIS)

C.  DOCUMENTS CONSIDERED TO BE RELEVANT

| Category* | Citation of document, with indication, where appropriate, of the relevant passages | Relevant to claim No. |
|---|---|---|
| X | JP 2001-061160 A  (Matsushita Electric Industrial Co., Ltd.), 06 March, 2001 (06.03.01), Par. Nos. [0035] to [0038], [0053] to [0067]; Figs. 3, 7 (Family: none) | 1-8 |
| A | JP 09-247701 A  (Hitachi Denshi, Ltd.), 19 September, 1997 (19.09.97), Par. Nos. [0021] to [0049] & US 005999230 A1 | 1-8 |
| A | JP 2002-330298 A  (Seiko Epson Corp.), 15 November, 2002 (15.11.02), Par. Nos. [0023] to [0039]; Figs. 2, 6 (Family: none) | 1-8 |

☐  Further documents are listed in the continuation of Box C.     ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 February, 2006 (21.02.06) | 28 February, 2006 (28.02.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3432468 B